# EUROPÄISCHE PATENTANMELDUNG

(11) **EP 0 604 719 A1**
(43) Veröffentlichungstag der Anmeldung: **06.07.1994**
(21) Anmeldenummer: 93116523.7
(22) Anmeldetag: 13.10.1993
(51) Int. Cl.: G06F 3/14, G09F 9/35, H04N 9/12

(54) **Verfahren und Anordnung zur Vernetzung von elektro-optischen Bildwandmodulen**

(30) Priorität: 28.12.1992 DE 4244584
(71) Anmelder: KRONE Aktiengesellschaft, D-14160 Berlin-Zehlendorf (DE)
(72) Erfinder: Pommerenke, Martin, D-10559 Berlin (DE); Siefker, Hartmuth, D-12307 Berlin (DE)

(57) **Zusammenfassung**

Die Erfindung bezieht sich auf ein Verfahren und eine Anordnung zur Vernetzung von elektro-optischen Bildwandmodulen. Die Aufgabe der Erfindung, den Einsatz von mechanischer Verbindungstechnik bei der Vernetzung zu vermeiden, wird durch die direkte oder indirekte optische Verkopplung der in den einzelnen Bildwandmodulen vorgesehenen Sende- und Empfangseinrichtungen erreicht, wobei die Informationsübertragung über an sich bekannte optische Bussysteme erfolgt.

## Beschreibung

Die Erfindung bezieht sich auf ein Verfahren und eine Anordnung zur Vernetzung von elektro-optischen Bildwandmodulen gemäß den Oberbegriffen der Ansprüche 1 und 5.

Eine elektro-optische Bildwand ist aus vielen gleichartigen Modulen aufgebaut. Jedes Modul beinhaltet Treiber für die elektro-optische Anzeigetechnik und Decoder für die Informationsverarbeitung. Die anzuzeigende Information wird mittels Leitungstechnik übertragen. Zur Vernetzung dieser Bildwandmodule werden üblicherweise Kabel und Steckverbinder verwendet. Dies hat den Nachteil zur Folge, daß bei großen Bildwänden erhebliche mechanische Verbindungstechnik, nämlich Kabel und Steckverbinder, zur Übertragung der anzuzeigenden Informationen benötigt wird. In jedem Modul ist eine Einrichtung zur Verbindung der Informationsleitungen eingebaut. Diese mechanische Verbindungstechnik ist verhältnismäßig aufwendig und verteuert die Herstellung von elektro-optischen Bildwänden. Darüber hinaus ist die üblicherweise eingesetzte mechanische Verbindungstechnik, bestehend aus Kupferkabeln und mechanischen Steckverbindern, störanfällig und nicht geschützt vor elektromagnetischer Ein- und Abstrahlung.

In zum Anmeldungsgegenstand gattungsfremden Rechnersystemen ist es bekannt, für die schnelle Datenübertragung zwischen verschiedenen Komponenten des Systems, die an gemeinsamen Verbindungsleitungen (Bus) angeschlossen sind, ein optisches Bussystem mit optisch parallelem Plattenstapel bzw. optisch paralleler Streifenleiterplatte zu verwenden (DE 40 06 510 A1). Der hier beschriebene optische Bus kann sowohl als serieller als auch paralleler Bus eingesetzt werden. Das Einsatzgebiet dieses optischen Busses sind digitale Schaltungen, die üblicherweise mittels eines digital-elektronischen Busses miteinander verbunden sind.

In der DE 41 41 387 A1 ist eine zum Anmeldungsgegenstand gattungsfremde Datenübertragungsschnittstelle für einen einstelligen Datenbus, vorzugsweise in Kraftfahrzeugen, der eine elektro-optische Datenübertragungsstrecke mit mindestens einem Datengeber und mindestens einem Datenempfänger enthält, beschrieben. Zur Signalbündelung und Fremdlichtabschirmung dient jeweils der Innenbereich eines Hohlkörpers. Im Hohlkörper werden die optischen Signale über eine Vielzahl von Reflexionen in alle Bereiche verteilt. Diese Datenverbindungen sind relativ langsam und nicht ohne weiteres auf andere Anwendungsgebiete übertragbar.

Aus der ebenfalls gattungsfremden DE 40 17 997 ist ein optisches Datenübertragungssystem bekannt, bei dem die in einer Reihe angeordneten Teilnehmer, welche jeweils mindestens einen optischen Sender und Empfänger enthalten, über die aus Hohlräumen gebildeteten Übertragungstrecken jeweils mit dem übernächsten Teilnehmer verbunden sind. Die an den Enden der Reihe liegenden Teilnehmer sind auch mit dem jeweils benachbarten Teilnehmer über optische Übertragungsstrecken verbunden. Die vorgesehene Anwendung bei Automatisierungsgeräten ist nicht ohne weiteres auf die Vernetzung von dazu gattungsfremden Bildwandmodulen übertragbar.

Der Erfindung liegt von daher die Aufgabe zugrunde, ein Verfahren und eine Anordnung zur Vernetzung von Bildwandmodulen zu entwickeln, mit dem der Einsatz von mechanischer Verbindungstechnik vermieden wird.

Die Lösung dieser Aufgabe ergibt sich aus den kennzeichnenden Merkmalen der Ansprüche 1 und 5.

Die direkte oder indirekte optische Kopplung der Sende- und Empfangseinrichtungen der einzelnen Bildwandmodule ermöglicht es, die mechanische Verbindungstechnik durch optische Übertragungstechnik zu ersetzen. Die Montage und die Wartung der Bildwandmodule werden vereinfacht und verbilligt, da keine Kabel und mechanischen Leitungsverbinder benötigt werden. Die Module können ausgewechselt werden, ohne daß Kabel und Leitungsverbinder gelöst werden müssen. Zur Informationsübertragung sind keine Leitungen, auch keine Lichtwellenleiter, notwendig. Der Fortfall der insgesamt langen Datenleitungen verhindert die Abstrahlung und mindert die Einstrahlung hochfrequenter Signalanteile aus bzw. in die Bildwandmodule. Durch die optische Verkopplung der Bildwandmodule werden höhere Übertragungsraten im Bildwandsystem möglich. Die vorgeschlagene Vernetzung der Bildwandmodule ist vom verwendeten Anzeigetyp unabhängig.

Weitere vorteilhafte Ausgestaltungen der Erfindung ergeben sich aus den Unteransprüchen.

Die Erfindung ist nachfolgend anhand von in den Zeichnungen dargestellter Ausführungsbeispiele der Anordnung zur Vernetzung von elektro-optischen Bildwandmodulen näher erläutert. Es zeigen:
- Fig. 1a,b: die schematische Darstellung der direkten optischen Kopplung zwischen zwei Modulen,
- Fig. 2: die schematische Darstellung der optischen Vernetzung zwischen Bildwandmodulen,
- Fig. 3: die schematische Darstellung der optischen Vernetzung (direkte Verkopplung) der Bildwandmodule einer Bildwand und
- Fig. 4: die schematische Darstellung der optischen Vernetzung (indirekte Verkopplung) der Bildwandmodule in der Seitenansicht.

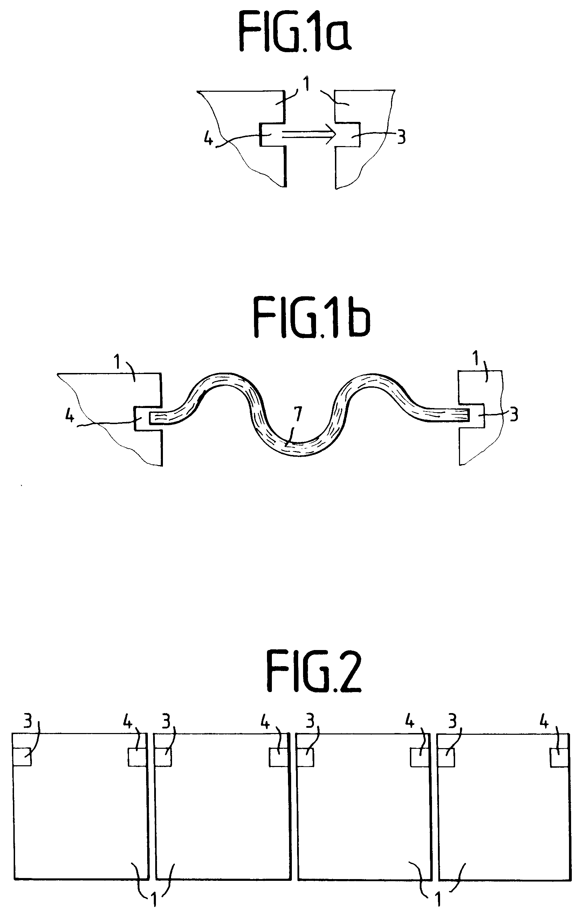

Die Fig. 1a,b zeigen das Prinzip der direkten optischen Vernetzung zwischen zwei Bildwandmodulen 1. Die Fig.1a zeigt die direkte optische Kopplung einer Sendeeinrichtung 4 des einen Bildwandmoduls 1 mit einer Empfangseinrichtung 3 des benachbarten Bildwandmoduls 1 über einen Lichtstrahl. Die Fig. 1b zeigt die Möglichkeit der optischen Verkopplung zwischen den beiden Bildwandmodulen 1 über eine Lichtleitfaser 7. Ausgestrahlte Datensignale, z.B. einer LED als Sendeeinrichtung 4, werden entweder über die Lichtleitfaser 7 oder direkt zu einer beispielsweise Fotodiode als Empfangseinrichtung 3 geleitet. Im Falle der Ausbildung der Verkopplung gemäß der Fig. 1a stehen beide Bildwandmodule 1 ohne Verwendung irgendwelcher Leitungen optisch miteinander in Verbindung. Es können Daten/Informationen von Modul zu Modul durch Licht übertragen werden.

In der Fig. 2 ist eine Zeilenanordnung von vier Bildwandmodulen 1 dargestellt, bei denen jeweils die Sendeeinrichtung 4 und die Empfangseinrichtung 3 in Form von LED und von Fotodioden miteinander optisch direkt in Kontakt stehe.

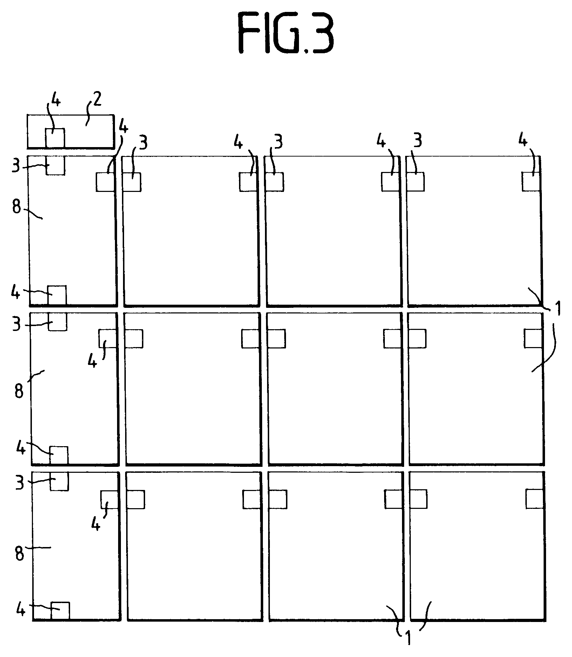

In der Fig. 3 ist der Aufbau einer Bildwand dargestellt, die aus neun Bildwandmodulen 1 gebildet ist, welche in drei Zeilen und drei Spalten angeordnet sind. Die einzelnen Bildwandmodule 1 sind direkt miteinander optisch über ihre jeweilige Empfangseinrichtung 3 und Sendeeinrichtung 4 verkoppelt. Die Sendeeinrichtungen 4 werden durch Fotodioden, die Empfangseinrichtungen 3 durch LED gebildet. Die Steuerung der Bildwandmodule 1 erfolgt von einer Einrichtung 2 zur Dateneinspeisung aus. Die Einrichtung 2 zur Dateneinspeisung ist optisch direkt mit einer Einrichtung 8 zur Zeileneinkoppelung der Daten verkoppelt. Jeder Bildwandzeile ist spaltenförmig eine solche Einrichtung 8 zur Zeileneinkopplung der Daten zugeordnet. Die Einrichtungen 8 sind ebenfalls direkt optisch miteinander verkoppelt. Die Einrichtung 2 zur Dateneinspeisung enthält eine Sendeeinrichtung 4 (LED), die optisch mit einer Empfangseinrichtung 3 der Einrichtung 8 zur Zeileneinkopplung der Daten verkoppelt ist. Die Einrichtung 8 zur Zeileneinkopplung der Daten enthält eine Sendeeinrichtung 4 (LED) zur Einkopplung der Daten in das erste Bildwandmodul 1 der ersten Zeile der Bildwand. Vom ersten Bildwandmodul 1 werden die Daten über die beschriebene direkte optische Verkopplung in das benachbarte Bildwandmodul 1 und in gleicher Art und Weise von Bildwandmodul 1 zu Bildwandmodul 1 eingekoppelt. Die Einrichtung 8 zur Zeileneinkopplung der Daten enthält eine weitere Sendeeinrichtung 4 (LED), welche über eine Empfangseinrichtung 3 (Fotodiode) in direktem optischen Kontakt mit einer weiteren Einrichtung 8 zur Zeileneinkopplung der Daten in die nächste Zeile der Bildwandmodule 1 steht. Die weiteren Einrichtungen 8 zur Zeileneinkopplung der Daten sind in gleicher Art aufgebaut und werden in gleicher Weise wie die beschriebene Einrichtung 8 wirksam.

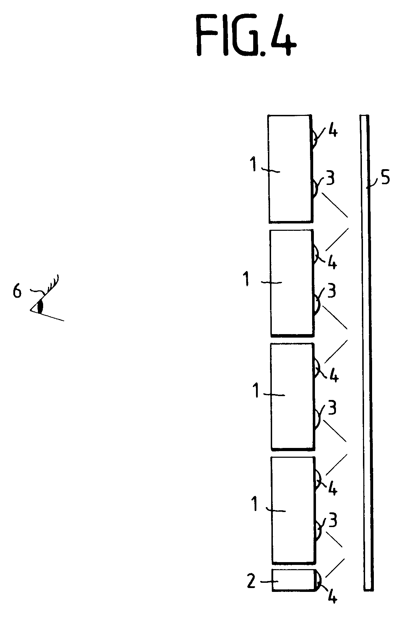

Die Fig. 4 zeigt die optische Vernetzung mehrerer Bildwandmodule 1 über eine indirekte Verkopplung. Jedes Bildwandmodul 1 ist mit einer eigenen Sende- und Empfangseinrichtung 4, 3, die aus einer oder aus mehreren LED und Fotodioden gebildet sind, ausgestattet. Die auf der Bildwand darzustellenden Daten werden über die Sendeeinrichtung 4 (LED) der Einrichtung 2 zur Dateneinspeisung optisch auf eine Reflexionswand 5 gestrahlt. Durch optische Reflexion an der Reflexionswand 5 gelangen die Daten auf die Empfangseinrichtung 3 (Fotodiode) des Bildwandmoduls 1. Von dort werden die Daten über die Sendeeinrichtung 4 (LED) gegen die Reflexionswand 5 geworfen. An der Reflexionswand 5 werden die Daten reflektiert und von dem folgenden Bildwandmodul 1 empfangen, gesendet usw. Für einen Betrachter 6 entsteht auf der Bildwand ein Bild, welches ohne Beeinträchtigungen durch die Reflexionswand 5 ist.

Beide Verfahren der optischen Vernetzung von Bildwandmodulen, das direkte und das indirekte Verkoppeln, können unabhängig von dem verwendeten Anzeigetyp eingesetzt werden. Durch die Vermeidung der mechanischen Verbindungstechnik und den alleinigen Einsatz von optischer Übertragungstechnik werden vielfältige Vorteile erzielt:

Die Montage und die Wartung der Bildwandmodule 1 sind vereinfacht, da keine Kabel und mechanischen Leitungsverbinder montiert und später gelöst werden müssen. Der Materialverbrauch ist durch die optische Vernetzung wesentlich geringer. Der Fortfall der langen Datenleitungen verhindert die Abstrahlung und mindert die Einstrahlung hochfrequenter Signalanteile in die Bildwandmodule 1 erheblich. Die optische Vernetzung ermöglicht höhere Übertragungsraten im Bildwandsystem.

### BEZUGSZEICHEHLISTE

- 01: Bildwandmodul
- 02: Einrichtung zur Dateneinspeisung
- 03: Empfangseinrichtung
- 04: Sendeeinrichtung
- 05: Reflexionswand
- 06: Betrachter
- 07: Lichtleitfaser
- 08: Einrichtung zur Zeileneinkopplung

## Patentansprüche

1. Verfahren und Anordnung zur Vernetzung von elektro-optischen Bildwandmodulen einer Bildwand,
**dadurch gekennzeichnet,**
daß jedes Bildwandmodul (1) mit einer eigenen optischen Sende- und Empfangseinrichtung (4,3) ausgerüstet wird und daß die optische Strahlung der Sendeeinrichtung (4) eines der Bildwandmodule (1) leitungslos auf die Empfangseinrichtung (3) eines benachbarten Bildwandmoduls (1) zur Wirkung gebracht wird und daß die Informationsübertragung über an sich bekannte optische Bussysteme vorgenommen wird.

2. Verfahren nach Anspruch 1, dadurch gekennzeichnet, daß die optische Strahlung der Sendeeinrichtung (4) eines der Bildwandmodule (1) leitungslos direkt auf die Empfangseinrichtung (3) eines der benachbarten Bildwandmodule (1) gerichtet wird.

3. Verfahren nach Anspruch 1, dadurch gekennzeichnet, daß die optische Strahlung der Sendeeinrichtung (4) eines der Bildwandmodule (1) indirekt über Reflexionen (5) leitungslos auf die Empfangseinrichtung (3) benachbarter Bildwandmodule (1) gerichtet wird.

4. Verfahren nach den Ansprüchen 1 und 2, dadurch gekennzeichnet, daß die optische Strahlung der Sendeeinrichtung (4) eines der Bildwandmodule (1) über eine Lichtleitfaser (7) direkt auf die Empfangseinrichtung (3) eines der benachbarten Bildwandmodule (1) gerichtet wird.

5. Anordnung zur Durchführung des Verfahrens nach den Ansprüchen 1, 2 und 4, dadurch gekennzeichnet, daß die in Zeilen und Spalten angeordneten Bildwandmodule (1) mit Einrichtungen (8) zur Zeileneinkopplung von Daten in die Bildwandmodule (1) optisch verbunden sind, wobei eine der Einrichtungen (8) zur Zeileneinkopplung mit einer Einrichtung (2) zur Dateneinspeisung optisch verbunden ist.

6. Anordnung nach Anspruch 5, dadurch gekennzeichnet, daß die Einrichtung (2) zur Dateneinspeisung mit einer Sendeeinrichtung (4) optisch mit der Empfangseinrichtung (3) der Einrichtung (8) zur Zeileneinkopplung verbunden ist, deren Sendeeinrichtungen (4) jeweils mit der Empfangseinrichtung (3) des benachbarten Bildwandmoduls (1) der anzusteuernden Zeile und mit der Empfangseinrichtung (3) der benachbarten Einrichtung (8) zur Zeileneinkopplung für die darunter liegende Zeile optisch verbunden ist.

7. Anordnung zur Durchführung des Verfahrens nach den Ansprüchen 1 und 3, dadurch gekennzeichnet, daß die Einrichtung (2) zur Dateneinspeisung mit der Sendeeinrichtung (4) optisch mit einer Reflexionswand (5) verbunden ist und daß die Bildwandmodule (1) mit ihren Sende- und Empfangseinrichtungen (4,3) optisch mit der Reflexionswand (5) und über diese untereinander verbunden sind.

8. Anordnung nach den Ansprüchen 5 bis 7, dadurch gekennzeichnet, daß die optischen Sende- und Empfangseinrichtungen (4,3) jeweils aus einem oder aus mehreren Sende- bzw. Empfangshalbleitern bestehen.

9. Anordnung nach Anspruch 8, dadurch gekennzeichnet, daß die Sende- und Empfangshalbleiter (4,3) aus einer oder aus mehreren Halbleiterdioden gebildet sind.
